**Europäisches Patentamt**

**European Patent Office**

**Office européen des brevets**

(11) Veröffentlichungsnummer: **0 163 870**
**B1**

(12) **EUROPÄISCHE PATENTSCHRIFT**

(45) Veröffentlichungstag der Patentschrift:
**11.10.89**

(21) Anmeldenummer: **85104544.3**

(22) Anmeldetag: **15.04.85**

(51) Int. Cl.⁴: **B 65 G 67/02**, B 65 G 67/08,
B 65 G 63/02,
B 65 G 13/075, B 65 F 9/00

(54) Vorrichtung zum Abheben und Abtransportieren von Müllcontainern von Müllsammelfahrzeugen.

(30) Priorität: **29.05.84 DE 3420059**

(43) Veröffentlichungstag der Anmeldung:
**11.12.85 Patentblatt 85/50**

(45) Bekanntmachung des Hinweises auf die Patenterteilung: **11.10.89 Patentblatt 89/41**

(84) Benannte Vertragsstaaten:
**AT BE CH DE FR GB IT LI LU NL SE**

(56) Entgegenhaltungen:
**DD--A-- 102 362**
**US--A-- 3 952 887**
**US--A-- 4 383 598**

(73) Patentinhaber: **EDELHOFF M.S.T.S. GMBH**
**Heckenkamp**
**D-5860 Iserlohn 5 (DE)**

(72) Erfinder: **Edelhoff, Gustav Dieter**
**Langerfeldstrasse**
**D-5860 Iserlohn (DE)**
Erfinder: **Smith, Fred T.**
**4039 Montaigne Way**
**Palos Verdes Pen, Ca. 90274 (US)**

(74) Vertreter: **Lorenz, Eduard et al**
**Rechtsanwälte Eduard Lorenz - Bernhard Seidler**
**Margrit Seidler - Dipl.-Ing. Hans-K. Gossel Dr. Ina**
**Philipps - Dr. Paul B. Schäuble Dr. Siegfried Jacker-meier**
**Widenmayerstrasse 23 D-8000 München 22 (DE)**

**Beschreibung**

Die Erfindung betrifft eine Vorrichtung zum Abheben von Wechselbehälter bildenden Containern von Müllsammelfahrzeugen und zu deren Abtransport.

Aus der DE-PS 24 58 903 sowie der am 29. Mai 1984 eingereichten Patentanmeldung der Anmelderin mit dem Titel « Motorgetriebenes Müllsammelfahrzeug mit als Wechselbehälter ausgebildeten Containern » sind Müllsammelfahrzeuge bekannt, die im Rahmen eines Wechselbehälter-Müllsammelsystems dem Einsammeln von Müll und dem Transportieren der mit Müll gefüllten Container zu einer zentralen Containerumschlagstelle dienen, an der die gefüllten Container gegen leere ausgetauscht und von der die gefüllten Container durch Spezialfahrzeuge zu Deponien transportiert werden. Dieses Wechselbehälter-Müllsammelsystem gewährleistet eine wirtschaftliche Müllbeseitigung, weil die speziell auf das Einsammeln von Müll eingerichteten Müllsammenfahrzeuge ganz überwiegend für die Sammelarbeit eingesetzt werden können und nur möglichst kurze Wege zu der zentralen Containerumschlagstelle zurückzulegen brauchen und weil zum Transport der Wechselbehälter zu entfernteren Deponien spezielle Transportfahrzeuge eingesetzt werden können, die mehrere Container aufnehmen können.

Bei dem in der DE-PS 24 58 903 beschriebenen Wechselbehälter-Müllsammelsystem sind die Container zu ihrem Abheben von dem Fahrgestell der Müllsammelfahrzeuge im Bereich ihrer Ecken mit gegen den Boden ausfahrbaren Stützen oder mit anderen Abheb- und Stützeinrichtungen versehen, so daß anschließend unter den abgestützten Container das diesen aufnehmende Transportfahrzeug fahren und der Container auf dieses abgesetzt und mit diesem verriegelt werden kann.

Die Leistungsfähigkeit und Wirtschaftlichkeit des Wechselbehälter-Müllsammelsystems wird maßgeblich auch von der Geschwindigkeit bestimmt, mit der die Container ausgetauscht und abtransportiert werden können.

Aufgabe der Erfindung ist es daher, eine bequem zu handhabende und weitgehend automatisierbare Vorrichtung der eingangs angegebenen Art zu schaffen, mit der sich die Container von den Müllsammelfahrzeugen abheben und abtransportieren oder für den Abtransport bereitstellen lassen.

Erfindungsgemäß wird diese Aufgabe bei einer Vorrichtung der gattungsgemäßen Art durch die kennzeichnenden Merkmale des Patentanspruchs 1 gelöst.

Bei der erfindungsgemäßen Vorrichtung führen die zinkenförmigen Arme, die ähnlich ausgebildet sind wie die zinkenförmigen Gabeln eines Gabelstaplers, zunächst eine Vorschubbewegung unter den entriegelten Container und anschließend eine Hub- Rückzugs- und Absetzbewegung auf den Förderer aus. Zum Abnehmen des Containers braucht das Müllsammelfahrzeug nur in die entsprechende Position vor dem Aufnahmeende der Fördereinrichtung gefahren zu werden, so daß nach vorzugsweise automatischer Entriegelung der Container diese durch die zinkenförmigen Arme abgehoben und auf die Fördereinrichtung aufgesetzt werden. Der Abnahmevorgang vollzieht sich somit in kürzester Zeit, so daß das Müllsammelfahrzeug nach Aufnahme eines leeren Containers wieder einsatzbereit ist. Die abgehobenen Container werden auf die Fördereinrichtung querstehend abgefördert, wobei nach Freigabe der Aufnahmestation der nächste Container abgehoben, abgesetzt und nachgefördert werden kann.

Aus DD-A-102 362 ist eine Vorrichtung zum Be- und Entladen von Containern mit vier Rädern versehenen Transporteinheiten bekannt. Zum Beladen des Containers mit den Transporteinheiten ist eine Gabelhubkatze vorgesehen, deren Gabeln unter die auf einem Förderwagen stehende Transporteinheit eingefahren werden. Anschließend werden die Gabeln angehoben und die abgehobene Transporteinheit wird durch Verfahren der Gabelhubkatze durch einen Spindeltrieb auf den Krakarmen eines Traggerüstes in den Container gefördert, der an seinem Einschubende mit einem rampenförmig geneigten Boden versehen ist. Durch Abschieben über den geneigten Boden kommen die Transporteinheiten von den Gabeln frei. Auf der Entladeseite ist der Container mit einer Übergabebrücke versehen, auf die die Transporteinheiten durch geneigte Führungsbahnen auflaufen. Weiterhin ist eine als Schubwagen ausgebildete Schubeinrichtung vorgesehen, die die Transporteinheiten auf ein abtransportierendes Fördermittel fördert. Zur Abnahme von Containern von Müllsammelfahrzeugen ist diese bekannte Vorrichtung jedoch nicht geeignet. Aus US-A-39 52 887 ist eine Vorrichtung zum Be-und Entladen von Lastkraftwagen bekannt, die aus einem auf einer Rampe angeordneten und mit Rollen versehenen Traggerüst besteht. Dieses Traggerüst ist über die Rampe ausfahrbar und unter die auf der Ladefläche eines Kraftfahrzeugs stehenden Paletten einfahrbar. Nach dem Einfahren des Ladegerüsts unter die Paletten wird dieses angehoben, so daß die Paletten auf dem Traggerüst stehend aus dem Lkw herausgezogen und auf die Rampe gefördert werden können. Auch diese Vorrichtung ist zum Abheben von Containern von Müllsammelfahrzeugen nicht geeignet.

Zweckmäßigerweise besteht die Fördereinrichtung aus einer ausgehend von dem Aufnahmeende geneigten Röllchenbahn, die mit Einrichtungen zum Abbremsen der auf diese abgesetzten Container versehen ist. Die Container werden auf der geneigten Röllchenbahn durch ihre Schwerkraft gefördert, wobei sie bis zu ihrem Abbremsen oder Aneinanderstoßen vorlaufen, so daß sie zum Zwecke ihres Abtransports in einer Reihe dicht aufeinanderfolgend bereitgestellt werden können.

Die Bremseinrichtungen bestehen zweckmäßigerweise aus seitlichen mit Bremsbelägen versehenen Trägern, die über die Förderebene anhebbar und unter diese absenkbar sind. Die Träger können über Parallellenker mit dem Grundrahmen des die Röllchenbahn tragenden Gestells verbunden und durch eine Druckmittelkolbenzylindereinheit heb- und absenkbar sein, deren Enden gelenkig mit dem Grundrahmen und den Trägern oder Parallellenkern verbunden sind. Das Heben und Senken der Bremsbalken kann in der Weise automatisch gesteuert ergolgen, daß die von der Aufnahmestation übernommenen Container auf der Röllchenbahn sanft abgleitend gefördert werden, ohne größeren Stoßbeanspruchungen ausgesetzt zu sein.

Am Ende der Förderstrecke werden die Container von den diese zu Deponien transportierenden Transportfahrzeugen übernommen. Zu diesem Zweck ist das Ende der Förderstrecke zweckmäßigerweise ebenfalls mit heb- und absenkbaren, vor- und zurückziehbaren gabelförmigen Zinken zum Abheben der Container von dem Übergabeende und zur Übergabe an ein Transportfahrzeug oder dergleichen versehen. Zusätzlich kann das Abgabeende mit einer Schiebeeinrichtung zum Abschieben der Container auf die oder von der Übergabeeinrichtung versehen sein.

Die Vorrichtung zum Abheben der entleerten Container von den Transportfahrzeugen und zum Transport und zur Übergabe an die Müllsammelfahrzeuge ist entsprechend ausgebildet. Zweckmäßigerweise sind an der zentralen Containerumschlagstelle parallel zueinander zwei Transport-, Abnahme- und Übergabevorrichtungen angeordnet, so daß die Müllsammelfahrzeuge an der Aufnahmestation der ersten Fördereinrichtung ihrem Container abgeben und nach Weiterfahrt um wenige Meter an dem Abgabeende der folgenden Fördereinrichtung bereits wieder einen leeren Container aufnehmen. Das Abgeben und Aufnehmen leerer bzw. gefüllter Container durch die Transportfahrzeuge vollzieht sich an den gegenüberliegenden Enden der Fördereinrichtungen in entsprechender Weise.

Im Bereich der Deponien können entsprechende Fördereinrichtungen vorgeschen sein, die der Ent- und Beladung der Transportfahrzeuge dienen und die die Behälter zum Zwecke des Verkippens bereitstellen und die entleerten Behälter wieder aufnehmen und zum Abtransport bereitstellen.

Ein Ausführungsbeispiel der Erfindung wird nachstehend anhand der Zeichnung näher erläutert. In dieser zeigt

Fig. 1 eine perspektivische Darstellung zweier parallel zueinander angeordneter Fördereinrichtungen zur Abnahme gefüllter Container von Müllsammelfahrzeugen und zum Transport zu Containertransportfahrzeugen und zur Abnahme von Contairnern von Containertransportfahrzeugen und zum Transport zu diese aufnehmenden Müllsammelfahrzeugen,

Fig. 2 der Fig. 1 entsprechende parallele Fördereinrichtungen zur Abnahme gefüllter Container von und zur Abgabe leerer Container auf Müllsammelfahrzeuge und zur Bereitstellung der Container zum Zwecke des Verkippens und zur Aufnahme entleerter Container,

Fig. 3 eine Seitenansicht der Fördereinrichtung zur Abnahme der gefüllten Container von Müllsammelfahrzeugen und zu deren Übergabe an Containertransportfahrzeuge,

Fig. 4 eine vergrößerte Darstellung der die quergeförderten Container abbremsenden Einrichtung in Seitenansicht,

Fig. 5 eine Vorderansicht der Bremseinrichtung nach Fig. 4,

Fig. 6 einen Schnitt durch die Fördereinrichtung nach Fig. 3 längs der Linie A - A,

Fig. 7 einen Schnitt durch die Fördereinrichtung längs der Linie B - B in Fig. 3,

Fig. 8 eine Seitenansicht des Schiebers nach Fig. 7,

Fig. 9 eine vergrößerte Seitenansicht des Aufnahmeendes der Fördereinrichtung gemäß Fig. 3 und

Fig. 10 eine vergrößerte Seitenansicht des Abgabeendes der Fördereinrichtung nach Fig. 3.

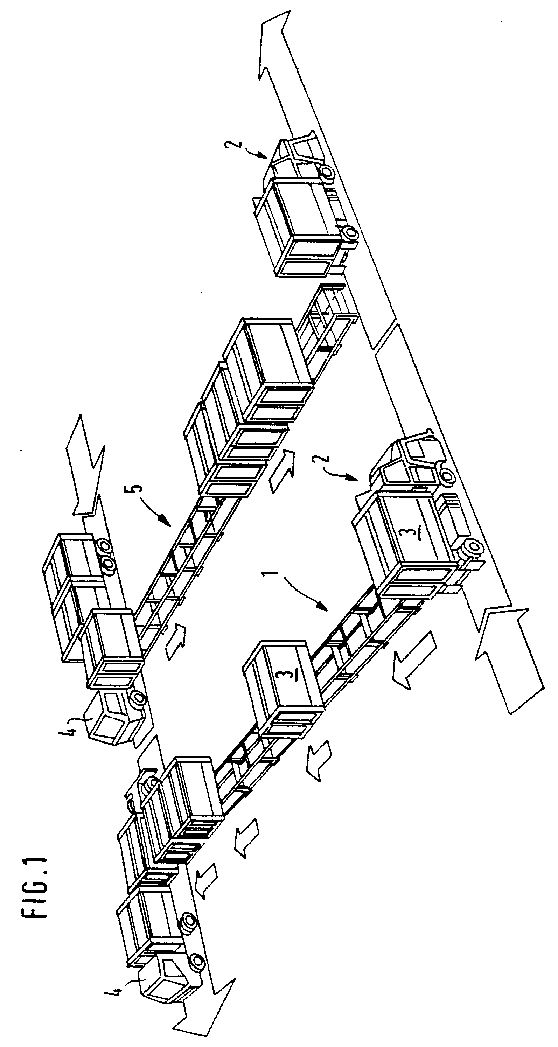

Die in Fig. 1 dargestellte zentrale Containerumschlagstelle besteht aus der Fördereinrichtung 1, die die von den Müllsammelfahrzeugen 2 angelieferten gefüllten Container 3 übernimmt, zum Abgabeende fördert und an die Containertransportfahrzeuge 4 übergibt, die drei Container laden können.

Parallel zu der Fördereinrichtung 1 ist die grundsätzlich entsprechend aufgebaute Fördereinrichtung 5 mit entgegengesetzter Förderrichtung angeordnet, die in der dargestellten Weise die von dem Containertransportfahrzeug 4 antransportierten leeren Container übernimmt und auf die Müllsammelfahrzeuge 2 absetzt.

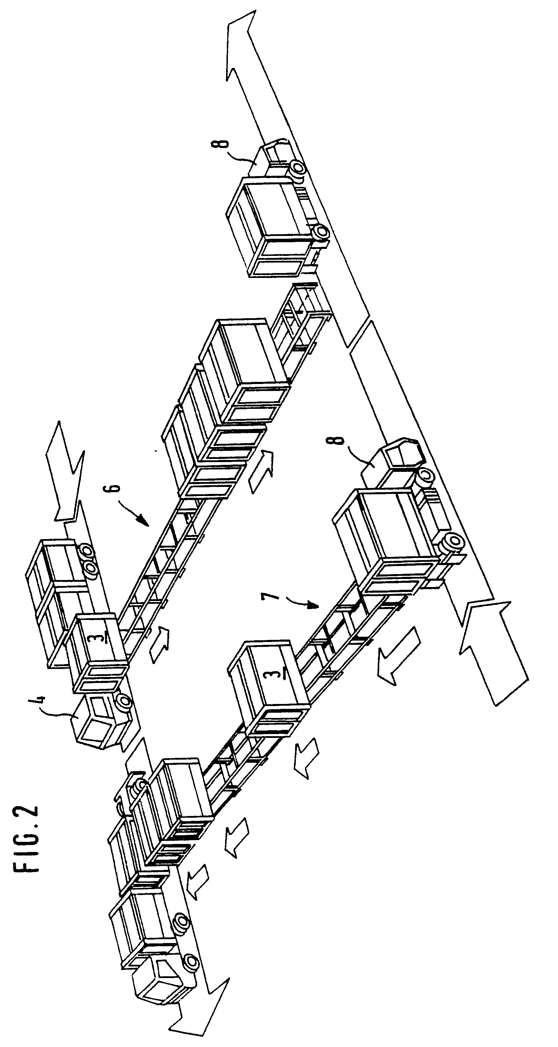

In Fig. 2 ist eine Containerumschlagstelle dargestellt, die sich im Bereich einer Deponie befindet. Die Containertransportfahrzeuge 4 liefern die Container 3 an, die von dem Aufnahmeende der Fördereinrichtung 6 übernommen und an deren Abgabeende in der Weise bereitgestellt werden, daß sie von den Transportfahrzeugen 8 übernommen werden können, die nur zum Transport der Container zu der Deponie und deren Verkippen dienen.

Parallel zu der Fördereinrichtung 6 ist die entsprechend aufgebaute Fördereinrichtung 7 mit entgegengesetzter Förderrichtung angeordnet. Von den Transportfahrzeugen 8 werden die verkippten Container dem Aufnahmeende der Fördereinrichtung 7 zugeführt und von dieser abgenommen. Die quergeförderten leeren Container 3 werden an dem Abgabeende der Fördereinrichtung 7 von den Transportfahrzeugen 4 übernommen und der zentralen Containerumschlagstelle gemäß Fig. 1 wieder zugeführt.

Von der Fördereinrichtung 6 könnten die gefüllten Container 3 auch durch andere Fördereinrichtungen abgenommen und verkippt und dem Zubringeförderer 7 wieder zugeführt werden.

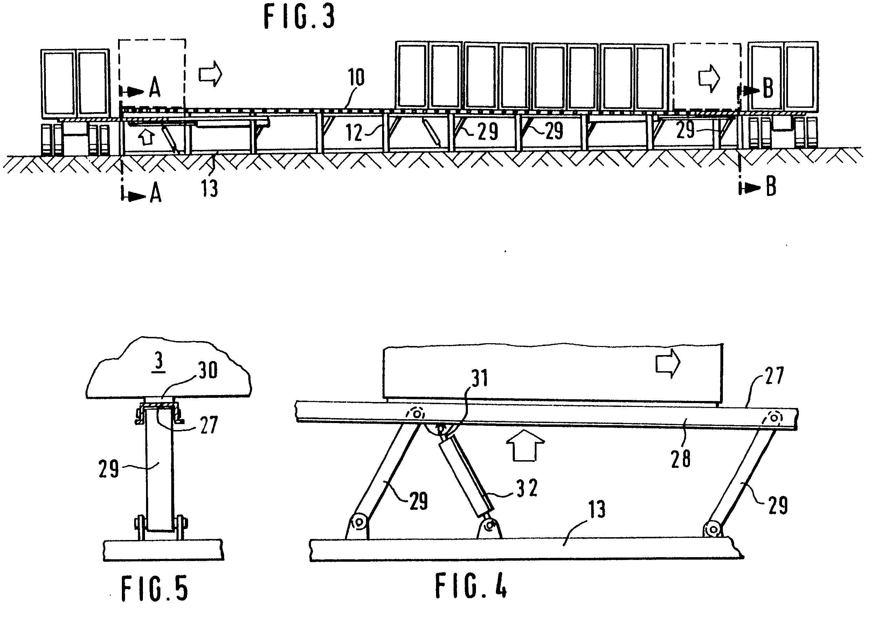

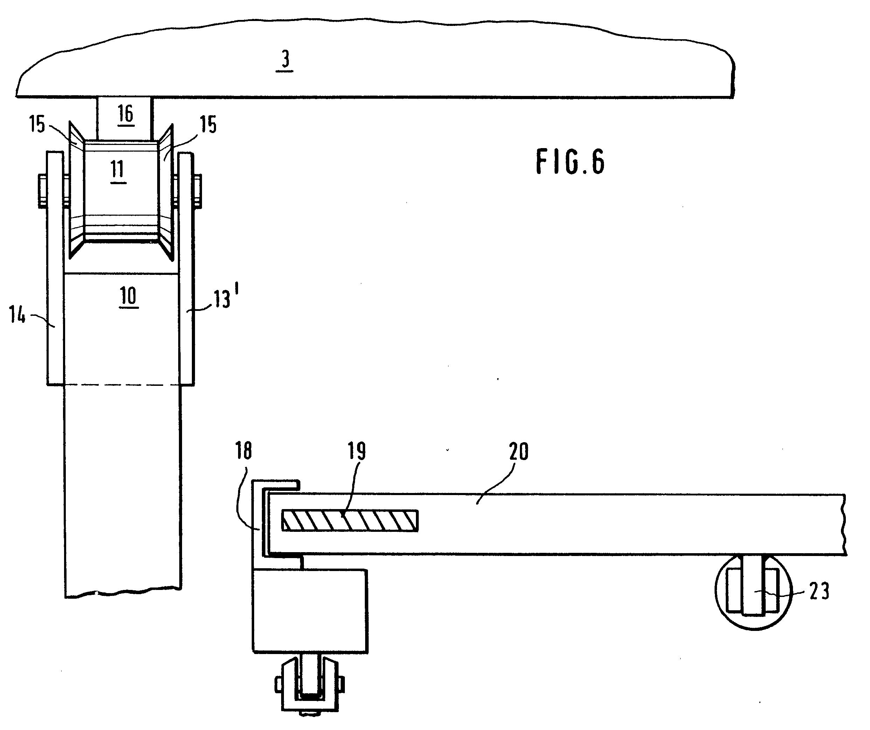

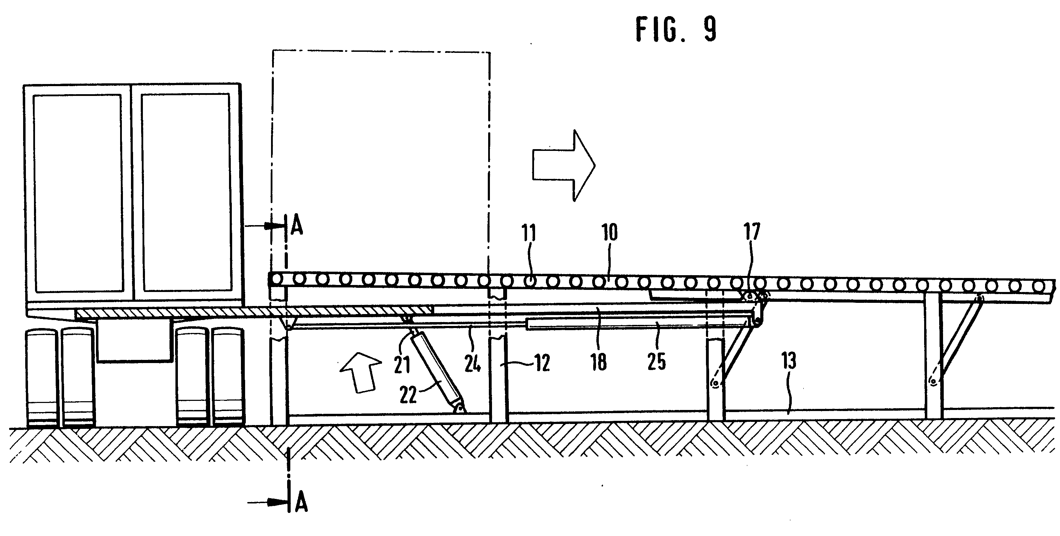

Anhand der Fig. 3 bis 10 wird nun die Fördereinrichtung 1 näher erläutert. Diese besteht aus einem Röllchen 11 tragenden Rahmen 10, der über Träger 12 auf einem Grundrahmen 13 abgestützt ist. Die Röllchen 11 sind beidseits des Rahmens 10 in mit dem Rahmen verschweißten Laschen 13', 14 drehbar gelagert. Sie weisen seitliche kegelstumpfförmige Führungsränder 15 auf. Die Container 3 sind an ihren Unterseiten mit parallel zueinander verlaufenden Kufen 16 versehen, mit denen sich diese auf den Röllchen 11 abstützen und die zwischen den Rändern 15 geführt sind.

Zwischen den Röllchen 11 ist an dem Rahmen 10 um die Achse 17 ein Führungsrahmen 18 schwenkbar gelagert, in dessen seitlichen U-förmigen Führungen ein die Zinken 19 tragender Schlitten 20 längsverschieblich geführt ist. Zum Verschwenken des Führungsrahmens 18 ist an diesem die Kolbenstange 21 einer Druckmittelkolbenzylindereinheit angelenkt, deren Zylinder 22 mit dem Grundrahmen 13 gelenkig verbunden ist. Im Gelenk 23 ist mit dem Schlitten 20 die Kolbenstange 24 einer Druckmittelkolbenzylindereinheit gelenkig verbunden, deren Zylinder 25 an den hinteren mittleren Bereich 18 angelenkt ist. Durch Ausfahren, Anheben, zurückziehen und Absetzen der Zinken lassen sich die gefüllten Container 3 von dem Müllsammelfahrzeug 2 abheben und auf das Aufgabeende der Fördereinrichtung 1 absetzen.

Zwischen den Rollchen 11 der durch den oberen Rahmen 10 gebildeten Röllchenbahn ist ein mit einem Bremsbelag 27 versehener Bremsbalken 28 angeordnet, der über Parallellenker 29 mit den Grundrahmen 13 des Röllchenförderers gelenkig verbunden ist. Der Container 3 ist im Bereich des Bremsbalkens 28 in der aus Fig. 5 ersichtlichen Weise mit einer Bremsschiene 30 versehen. Mit dem Bremsbalken 28 ist die Kolbenstange 31 einer Druckmittelkolbenzylindereinheit gelenkig verbunden, deren Zylinder 32 an den Grundrahmen 13 angelenkt ist. Die den Bremsbalken 28 lagernden Lenker 29 nehmen eine geneigte Stellung ein, so daß durch Ausfahren der Kolbenstange 31 der Bremsbalken 28 über die Ebene der oberen Mantellinien der Röllchen 11 gehoben werden und die aufder geneigten Röllchenbahn abrollenden Container 3 abbremsen kann.

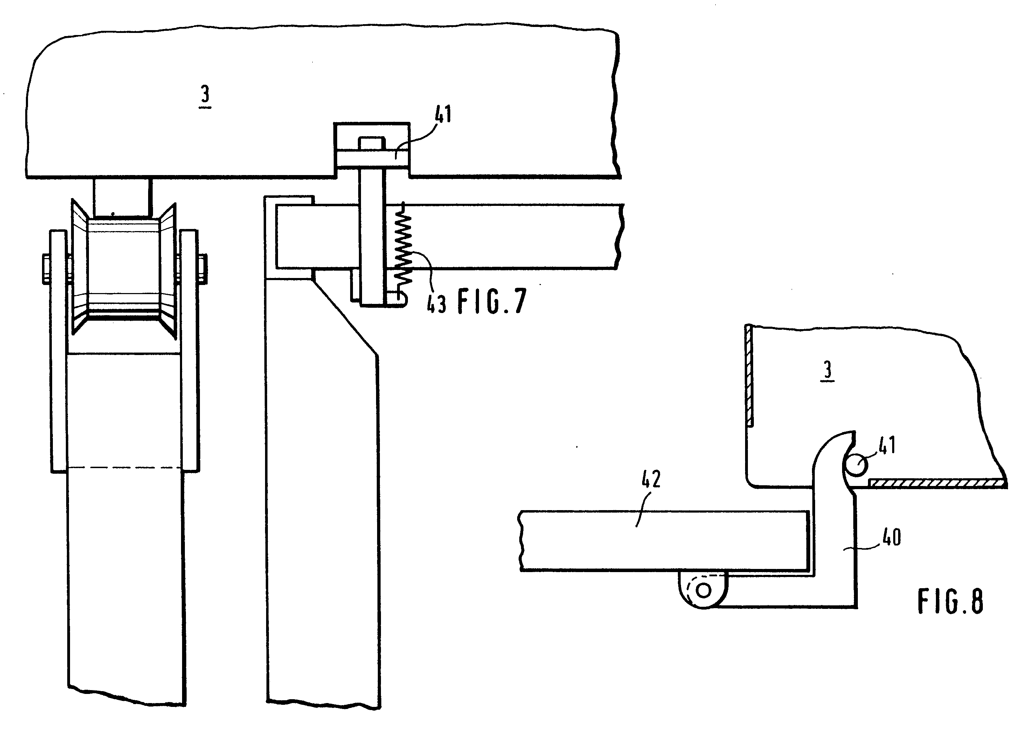

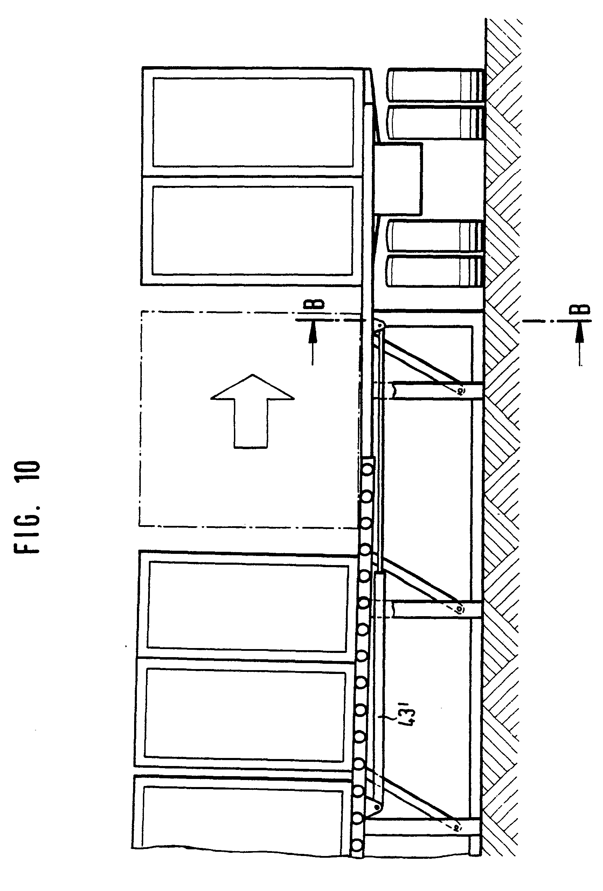

An dem in Fig. 10 in vergrößerter Darstellung gezeigten Abgabeende des Förderers sind Schieber 40 vorgesehen, deren abgewinkelten Enden hinter Bolzen 41 der Container 3 greifen und diese auf die Containertransportfahrzeuge schieben. Die Schieber 40 bestehen aus Winkelhebeln und sind an einer Schlitten 42 gelagert, der in Führungen von einer Druckmittelkolbenzylindereinheit 43' hin- und herbeweglich ist. Die aus Winkelhebeln bestehenden Schieber sind durch Zugfedern 43 gegen einen Anschlag des Schlittens 42 in ihrer Schubstellung gehalten. Werden die Schieber 42 zurückgezogen, können sie in der aus den Fig. 7 und 8 ersichtlichen Weise gegen die Kraft der Feder 43 im Uhrzeigersinn verschwenkt und unter den Containern hinweggezogen werden.

Zum Abschieben der Container 3 von der Fördereinrichtung können wiederum ausfahrbare zinkenförmige Arme vorgesehen werden, die zweckmäßigerweise heb- und absenkbar sind.

**Patentansprüche**

1. Vorrichtung zum Anheben von Wechselbehälter bildenden Containern (3) von Müllsammelfahrzeugen (2) und zu deren Abtransport, dadurch gekennzeichnet,

daß eine die Container (3) quer fördernde Fördereinrichtung (1) vorgesehen ist, deren Aufnahmeende im Bereich der Höhe der Transportplattform des Müllsammelfahrzeugs (2) angeordnet ist, und

daß die Fördereinrichtung (1) am Aufnahmeende mit zinkenförmigen Armen (19) versehen ist, die zur Aufnahme des Containers (3) von dem Müllsammelfahrzeug (2) absenkbar und über das Aufnahmeende der Fördereinrichtung (1) hinaus ausfahrbar und dabei unter die entriegelten Container (3) einfahrbar und sodann über die Förderebene der Fördereinrichtung (1) anhebbar und zurückziehbar und zum Absetzen des Containers (3) auf die Fördereinrichtung unter die Förderebene absenkbar sind.

2. Vorrichtung nach Anspruch 1, dadurch gekennzeichnet, daß die Fördereinrichtung (1) aus einer ausgehend von dem Aufnahmeende geneigten Röllchenbahn (10, 11) besteht, die mit Einrichtungen (27-31) zum Abbremsen der auf diese abgesetzten Container (3) versehen ist.

3. Vorrichtung nach Anspruch 2, dadurch gekennzeichnet, daß die Bremseinrichtung aus seitlich doppelt oder einfach im mittleren Bereich der Röllchenbahn (10, 11) angeordneten, mit Bremsbelägen (30) versehenen Balken (28) bestehen, die über die Förderebene anhebbar und unter diese absenkbar sind.

4. Vorrichtung nach Anspruch 3, dadurch gekennzeichnet, daß die Bremsbalken (28) über Parallellenker (29) mit dem Grundrahmen (13) des dies Röllchenbahn (10, 11) tragenden Gestells verbunden und durch eine Druckmittelkolbenzylindereinheit (32) heb- und absenkbar sind, deren Enden gelenkig mit dem Grundrahmen (13 und dem Bremsbalken (28) oder einem an diesen angelenkten Parallelenker (29) verbunden sind.

5. Vorrichtung nach einem der Ansprüche 1 bis 4, dadurch gekennzeichnet, daß das Abgabeende der Fördereinrichtung (1) mit heb- und absenkbaren, vor- und zurückziehbaren gabelförmigen Zinken zum Anheben der Container (3) von dem Abgabeende und zur Übergabe an ein Transportfahrzeug (4) o.dgl. versehen ist.

6. Vorrichtung nach Anspruch 5, dadurch gekennzeichnet, daß das Abgabeende der Fördereinrichtung (1) mit einer Schiebereinrichtung (40, 42) zum Abschieben der Container (3) von den Zinken versehen ist.

7. Vorrichtung nach einem der vorhergehenden Ansprüche, dadurch gekennzeichnet, daß die Röllchen (11) paarweise seitlich angeordnet und mit nach innen hin abgeschrägten seitlichen Führungsrändern (15) versehen sind, deren Abstand größer ist als die Breite der zwischen diesen geführten Kufen (16) der Container (3).

## Claims

1. Apparatus for lifting containers (3) forming interchangeable receptacles from refuse collection vehicles (2) and for transporting same away characterised in that
   there is provided a conveyor device (1) for transversely conveying the containers (3), the receiving end of the conveyor device being arranged in the region of the heigt of the transport bed of the refuse collection vehicle (2), and
   the conveyor device (1) is provided at the receiving end with prong-like arms (19) which for the purposes of receiving the container (3) from the refuse collection vehicle (2) can be lowered and extended beyond the receiving end of the conveyor device (1) and in that condition can be moved in under the released containers (3) and can then be lifted above in under the released containers (3) and can then the be lifted above the plane of conveying movement of the conveyor device (1) and withdrawn and can be lowered below the plane of conveying movement for depositing the container (3) on to the conveyor device.

2. Apparatus according to claim 1 characterised in that the conveyor device (1) comprises a roller track (10, 11) which is inclined starting from the receiving end and which is provided with means (27-31) for braking the containers (3) which are deposited thereon.

3. Apparatus according to claim 2 characterised in that the braking means comprise bars (25) which can be raised above and lowered below the plane of conveying movement and which are provided with brake linings (30) and which are disposed laterally in a double or single array in the middle region of the roller track (10, 11).

4. Apparatus according to claim 3 characterised in that the brake bars (28) are connected by way of parallel links (29) to the base frame (13) of the frame structure carrying the roller track (10, 11) and can be raised and lowered by a pressure fluid piston cylinder unit (32), the ends of which are pivotally connected to the base frame (13) and the brake bar (28) or a parallel link (29) connected to the latter.

5. Apparatus according to one of claims 1 to 4 characterised in that the delivery end of the conveyor device (1) is provided with fork-like prongs which can be raised and lowered and extended and withdrawn for lifting the containers (3) from the delivery end and transferring same to a transport vehicle (4) or the like.

6. Apparatus according to claim 5 characterised in that the delivery end of the conveyor device (1) is provided with a pushing means (40, 42) for pushing the containers (30) off the prongs.

7. Apparatus according to one of the preceding claims characterised in that the rollers (11) are laterally arranged in pairs and are provided with inwardly inclined lateral guide edges (15), the spacing of which is greater than the width of the skids (16) of the containers (3), which are guided therebetween.

## Revendications

1. Dispositif pour soulever des récipients échangeables formant les récipients à ordures (3) de véhicules à ordures (2) et pour leur évacuation, caractérisé en ce
   qu'un dispositif de transport (1) transportant les récipients (3) transversalement est prévu dont l'extrémité de réception est agencée dans la zone de la hauteur de la plateforme de transport du véhicule à ordures (2)
   et que le dispositif de transport (1) est pourvu à l'extrémité de réception de bras (19) en forme de dents, qui peuvent être abaissés pour recevoir le récipient (3) du véhicule à ordures (2) et qui peuvent être sortis au-delà de l'extrémité de réception du dispositif de transport (1) en étant rentrés sous le récipient (3) déverrouillé et ensuite être relevés au-dessus du niveau de transport du dispositif de transport (1) et rétractés et qui peuvent être abaissés au-dessous du niveau de transport pour déposer le récipient (3) sur le dispositif de transport.

2. Dispositif selon la revendication 1, caractérisé en ce que le dispositif de transport (1) consiste en un transporteur à galets (10, 11) incliné partant de l'extrémité de réception, qui est pourvu de dispositifs (27-31) pour freiner le récipient (3) qui est déposé sur la chaîne.

3. Dispositif selon la revendication 2, caractérisé en ce que le dispositif de freinage consiste dans des poutres (28) revêtues de garnitures de frein (30) disposées latéralement en exécution double ou simple dans la zone médiane du transporteur à galets (10, 11), poutres qui peuvent être relevées au-dessus du plan de transport et abaissées au-dessous de celui-ci.

4. Dispositif selon la revendication 3, caractérisé en ce que les poutres de freinage (28) sont raccordées au bâti portant le cadre de base (13) du transporteur à galets (10, 11) par l'intermédiaire de bras parallèles (29) et que les poutres peuvent être relevées et abaissées au moyen d'une unité (32) cylindre/piston à fluide dont les extrémités sont articulées sur le cadre de base (13) et la poutre de freinage (28) ou sont raccordées à un bras parallèle (29) articulé sur le cadre.

5. Dispositif selon l'une des revendications 1 à 4, caractérisé en ce que l'extrémité de déchargement du dispositif de transport (1) est pourvue de dents en forme de fourche pouvant être relevées et abaissées, sorties et rétractées pour soulever les récipients (3) de l'extrémité de déchargement et pour les remettre à un véhicule de transport (4) ou à un équipement semblable.

6. Dispositif selon la revendication 5, caractérisé en ce l'extrémité de déchargement du dispositif de transport (1) est pourvue d'un dispositif poussoir (40, 42) pour pousser le récipient (3) des dents.

7. Dispositif selon l'une des revendications précédentes, caractérisé en ce que les galets (11) sont disposés par paire latéralement et sont pourvus de bords de guidage (15) latéraux biseautés vers l'intérieur dont la distance est supérieure à la largeur des patins (16) des récipients (3) qui sont guidés entre ces bords.

FIG.1

FIG.2

EP 0 163 870 B1

FIG.3

FIG.4

FIG.5

FIG.6

FIG. 7

FIG. 8

EP 0 163 870 B1

FIG. 9

FIG. 10

EP 0 163 870 B1